# EUROPÄISCHE PATENTSCHRIFT

(11) **EP 1 863 745 B1**
(45) Veröffentlichungstag und Bekanntmachung des Hinweises auf die Patenterteilung: **28.12.2011**
(21) Anmeldenummer: 06723618.2
(22) Anmeldetag: 22.03.2006
(51) Int. Cl.: C04B 35/106, C04B 38/00, C04B 35/10, C04B 35/12, C04B 35/66

(54) **GEBRANNTES, KERAMISCHES FEUERFESTES PRODUKT**
FIRED, REFRACTORY CERAMIC PRODUCT
PRODUIT CALCINE EN CERAMIQUE REFRACTAIRE

(30) Priorität: 11.07.2005 DE 102005032254
(43) Veröffentlichungstag der Anmeldung: 12.12.2007
(73) Patentinhaber: Refractory Intellectual Property GmbH & Co. KG, 1100 Wien (AT)
(72) Erfinder: DJURICIC, Boro, A-8700 Leoben (AT); BUCHBERGER, Bernd, A-8793 Trofaiach (AT); SANTOWSKI, Klaus, A-8130 Frohnleiten (AT); KOECK, Franz, A-8820 Kulm am Zirbitz (AT)
(74) Vertreter: Becker, Thomas
(86) Internationale Anmeldenummer: PCT/EP2006/002622
(87) Internationale Veröffentlichungsnummer: WO 2007/006350

(56) Entgegenhaltungen:
- WO-A-01/25165
- DE-A1- 19 727 649
- DE-C1- 19 941 610
- US-A- 5 217 930
- US-A- 5 407 875
- US-A1- 2002 103 070
- DATABASE WPI Section Ch, Week 199703 Derwent Publications Ltd., London, GB; Class L02, AN 1997-029371 XP002386817 & JP 08 290958 A (NIPPON STEEL CORP) 5. November 1996 (1996-11-05)
- AKSEL C ET AL: "The influence of zircon in a model aluminosilicate glass tank forehearth refractory" JOURNAL OF THE EUROPEAN CERAMIC SOCIETY, ELSEVIER SCIENCE PUBLISHERS, BARKING, ESSEX, GB, Bd. 23, Nr. 12, November 2003 (2003-11), Seiten 2083-2088, XP004428446 ISSN: 0955-2219

## Beschreibung

Die Erfindung betrifft ein gebranntes, keramisches, feuerfestes Produkt. Hierzu zählen Produkte, die aus Zirkonsilikat unterschiedlicher Reinheit hergestellt werden, beispielsweise aus natürlichem Zirkonsilikat (ZrSiO₄). Dabei sind folgende Herstellungsverfahren bekannt:
Aksel et.al. beschreiben in "Journal of the European Ceramic Society, November 2003, Seiten 2083-2088,XP 004428446 ISSN: 0955-2219" den Einfluss von Zirkon-Verbindungen zu einer Grundmischung auf Basis Aluminiumoxid. Das gebrannte Produkt weist eine Gesamtporosität von 25 bis 35 % auf. Gemäß einem Ausführungsbeispiel liegt ca. 4,5 % der Poren in einem Durchmesserbereich < 20 µm.

Die JP-A-08290958 betrifft oxidische Feuerfestkeramik mit hoher Hitzeschockbeständigkeit als feuerfeste Auskleidung in Behältern für geschmolzenes Metall. Die scheinbare Porosität des Materials beträgt 5 bis 50 %, wobei ≥ 80 % der Gesamtporosität einen Durchmesser von ≤ 1 µm aufweisen.
- Zirkonsilikat wird gesintert, anschließend gemahlen und das vorgebrannte, gemahlene Produkt wird danach unter Zugabe eines Bindemittels geformt und noch einmal gebrannt. Nachteilig ist die mehrstufige und damit zeitaufwendige und teure Herstellung. Diese Produkte sind für Anwendungen in der Glasindustrie (Auskleidung von Ofenwannen) nicht ausreichend dicht und korrosionsfest.
- Formteile werden aus ZrSiO₄-Suspensionen gegossen. Solche Produkte weisen keine zufrieden stellenden Produkteigenschaften auf. Insbesondere die mechanischen Eigenschaften, wie die Thermoschockresistenz, sind häufig nicht ausreichend.

Gebrannte Produkte auf Basis Zirkonsilikat finden insbesondere zur Auskleidung von Glasschmelzöfen Verwendung. Sie weisen in der Regel eine geringe Temperaturwechselbeständigkeit und einen hohen Korrosionswiderstand gegenüber der Glasschmelze auf. Die Zirkonprodukte werden mit möglichst hoher Rohdichte (> 4 g/cm³) hergestellt.

Die besten, derzeit auf dem Markt befindlichen Steine auf Basis Zirkonsilikat weisen eine Rohdichte von ca. 4,4 g/cm³ und eine offene Porosität < 1 Vol.-% auf. Sie enthalten außer Zirkonsilikat: Nebenbestandteile wie Al₂O₃, TiO₂, HfO₂ und Y₂O₃.

Es ist zwar zu erwarten, dass ultrareine Zirkonsilikatprodukte hoher Dichte für die Anwendung in Glasschmelzwannen besondere Vorteile aufweisen.

Es ergeben sich jedoch Schwierigkeiten bei der Herstellung wegen der hohen Sintertemperatur, die für solche Produkte notwendig ist. Es wurde festgestellt, dass bei Temperaturen über 1.650° C, teilweise auch schon darunter, eine thermische Zersetzung des Zirkonsilikates in ZrO₂ und SiO₂ stattfindet.

Zur Erzielung einer möglichst hohen Rohdichte wurden deshalb verschiedene Sinterhilfsmittel dem Zirkonsilikat-Rohstoff zugemischt, beispielsweise MgO, ZnO, Al₂O₃ und TiO₂.

Die aktuellen Anforderungen an Zirkonprodukte, die für die Auskleidung von Glasschmelzwannen geeignet sind, lassen sich wie folgt zusammenfassen: Möglichst geringe Porosität, ein möglichst geringer Anteil an offener Porosität, hohe Rohdichte (= bulk density).

Diese Eigenschaften erfüllt das vorstehend genannte, derzeit beste im Markt angebotene Zirkonprodukt, welches am Ende dieser Beschreibung näher vorgestellt wird. Bei höheren Temperaturen der Glasschmelze (>1.600° C) kommt es bei diesem Produkt zu einem Ausschwitzen von Schmelzphase aus dem Produkt. Dies führt dazu, dass die Steinmatrix teilweise nur noch aus skelettartig angeordneten Zirkonsilikatkörnern besteht, wodurch Glasschmelze infiltrieren kann und zur Zerstörung des Feuerfestmaterials führt. Gleichzeitig kommt es zur Kontamination der Glasschmelze durch gelöste und ungelöste Bestandteile des Feuerfestmaterials. Dies kann generell, im Speziellen für Glasschmelzen zur Herstellung hochwertiger Gläser, insbesondere optischer Gläser, nicht akzeptiert werden.

Ein weiterer Nachteil der bekannten Zirkonprodukte ist ihre geringe Thermoschockbeständigkeit. Kommt es zur Ausbildung eines Risses im Stein, so pflanzt sich dieser schnell fort und zerstört das Steingefüge. Insgesamt sind die bekannten Steine als äußerst spröde zu qualifizieren. Daraus folgt ein vorzeitiger Verschleiß durch Abplatzungen oder Rissbildung. Damit verbunden sind Produktionsausfall und Kosten.

Für die genannte Anwendung in Glasschmelzwannen werden auch feuerfeste keramische Produkte auf Basis Aluminiumoxid (Al₂O₃) oder Kombinationen von Al₂O₃ und ZrO₂ eingesetzt.

Der Erfindung liegt die Aufgabe zugrunde, ein feuerfestes keramisches Produkt anzubieten, welches zur Ausmauerung von Glasschmelzwannen eingesetzt werden kann, insbesondere Glasschmelzwannen zur Herstellung hochwertiger Gläser. Dazu gehören unter anderem: optische Gläser, hochtemperaturbeständige Gläser, besonders reine Glassorten. In diesem Zusammenhang soll das Produkt möglichst viele der nachfolgenden Eigenschaften kumulativ aufweisen: eine hohe Temperaturbeständigkeit, eine gute Thermoschockbeständigkeit, ein günstiges Korrosionsverhalten, eine gewisse Gefügeelastizität. Außerdem sollen Verunreinigungen der Glasschmelze im Kontaktbereich Feuermaterial/Glasschmelze weitestgehend verhindert werden.

Zur Lösung dieser Aufgaben wurden umfangreiche Versuche durchgeführt. Dabei wurden folgende Erkenntnisse erzielt:
- Neben der chemischen Zusammensetzung spielt vor allem das Mikrogefüge des gebrannten Produktes eine entscheidende Rolle. Entsprechend wurde versucht, die Porosität und die Porengröße sowie die Porengrößenverteilung zu optimieren.
- Die Rohstoffe zur Herstellung eines erfindungsgemäßen Produktes werden überwiegend feinteilig aufbereitet und anschließend in Granalienform gebracht. Beim Brand (Pyroprozess) kommt es zur Ausbildung eines Gefüges, bei dem die einzelnen Granalien zwar verschwinden; die ursprüngliche Granalienstruktur ist aber auch am gebrannten Produkt meist noch erkennbar. Dabei wurde festgestellt, dass der Gefügeaufbau, insbesondere die Bereiche zwischen den (ursprünglichen) Granalien, einen besonderen Einfluss auf die Produkteigenschaften (insbesondere die Produkteigenschaften geformter Erzeugnisse, wie Steine (bricks)) haben können.

Danach betrifft die Erfindung in ihrer allgemeinsten Ausführungsform ein gebranntes, keramisches, feuerfestes Produkt mit den Merkmalen des Anspruchs 1.

Ein wesentliches Merkmal stellt demnach die Porengröße und die Porengrößenverteilung dar. Der überwiegende Teil der Poren (> 50 % des gesamten offenen Porenvolumens) soll in einem schmalen Porengrößenintervall ("Porenband") liegen. Innerhalb des genannten Porenbereiches von ≥ 1 µm bis ≤ 15 µm sind obere Grenzwerte von 10 µm, 8 µm, 7 µm oder 5 µm möglich. Der untere Grenzwert kann auch bei 2 oder 3 µm liegen. Soweit die Obergrenze über 5 µm liegt, kann auch die Untergrenze bei 5 µm gewählt werden. Typischerweise liegt ein Großteil der Poren im Bereich 1 bis 5 µm oder 1-10 µm vor.

Definitionsgemäß beziehen sich die erfindungsgemäß relevanten Poren auf ein Porengrößenintervall/Porenband, bei dem die größte erfasste Pore eine Größe hat, die ≤ dem 10-fachen der Größe der kleinsten Pore in diesem Intervall ist, also zum Beispiel auf folgende Porengrößenintervalle: 1 bis 10 µm oder 4-14 µm.

Der Anteil solcher Poren an der gesamten offenen Porosität beträgt nach verschiedenen Ausführungsformen über 60 %, über 70 %, aber auch über 80 %.

Die Porengrößen und Porengrößenverteilung außerhalb des erfindungsgemäß definierten Anteils (nachstehend auch "Mikroporosität" genannt) sind unkritisch. Diese "Restporen" können beispielsweise Porendurchmesser bis 400 µm ("Makroporosität") aufweisen. Bei einem Produkt, bei dem beispielsweise 60 % der offenen Poren im Bereich 1-10 µm liegen, können andere offene Poren einen Durchmesser < 1 µm aufweisen. Insbesondere bei Produkten aus Al₂O₃ /ZrO₂ -Werkstoffen wurde festgestellt, dass es unterhalb des unteren Grenzwertes für den erfindungsgemäß wichtigen Häufungsbereich von offenen Poren (hier beispielsweise: 1-10 µm) zu einem zweiten Häufungsbereich kommen kann. Trägt man die Porendurchmesser gegen die relative offene Porosität in % auf, so ergibt sich ein zweiter "peak" in einem zweiten Porengrößenintervall, für das wiederum gilt, dass der Maximalwert kleiner oder gleich dem 10-fachen des Minimalwertes beträgt, also beispielsweise 0,05 bis 0,5 µm oder 0,08 bis 0,8 µm (nachstehend auch "Nanoporosität" genannt). Der Anteil dieser Nanoporosität (innerhalb des Bereichs der Mikroporosität) liegt typischerweise bei ≤ 20 % der offenen Gesamtporosität, kann aber auch ≤ 40 % oder ≤ 45 % ausmachen.

Mit anderen Worten: Je mehr Poren (≤ 15 µm, bevorzugt ≤ 10 µm Durchmesser) in einem möglichst engen Porengrößenbereich (Porenband) liegen, umso günstiger wirkt sich dies auf die Produkteigenschaften aus. Dies gilt insbesondere für die Korrosionsbeständigkeit und die Temperaturwechselbeständigkeit, aber auch für die Kaltdruckfestigkeit vor und nach Temperaturbehandlung.

Die offene Porosität kann 4 bis 30 Vol.-% betragen, nach Ausführungsformen bis 25 Vol.-%, bis 20 Vol.-% oder bis 18 Vol.-%, bei Untergrenzen von alternativ 5 Vol.-%, 8 Vol.-% oder 14 Vol.-%. Die Korngröße (Feinteiligkeit) der Versatzkomponenten, die Größe und Dichte der daraus hergestellten Granalien, die Verarbeitungsbedingungen zu Formkörpern und der anschließende Brand beeinflussen die Porengröße und Porengrößenverteilung. Durch langsames Aufheizen (z.B. 10-25° C/h) und/oder Haltezeiten bei bestimmten Temperaturen (z.B. je 4 h bei 200° C, 400° C und 700° C) kann die Bildung von Poren < 15 µm begünstigt werden.

Für Produkte auf Basis Zirkonsilikat gilt dabei: Es kann vorteilhaft sein, wenn während des Brandes im Gefüge in situ Zirkondioxid (ZrO₂) als Nebenphase gebildet wird. Solche ZrO₂-Körner, die anschließend mehr oder weniger homogen im Gefüge (in der Mikrostruktur) verteilt sind, fördern die günstigen duktilen Eigenschaften des Zirkonproduktes. Sie verbessern insbesondere die Gefügeelastizität. Dies gilt insbesondere dann, wenn die ZrO₂-Körner einzeln, also mit Abstand zueinander, im Gefüge vorliegen. Der Abstand zwischen benachbarten ZrO₂-Teilchen soll dabei in jedem Fall größer sein als das Teilchen selbst. Der Abstand benachbarter ZrO₂-Teilchen kann das 3 bis 5-fache, aber auch mehr als das 10-fache des größten Durchmessers eines solchen Teilchens betragen. Die ZrO₂-Partikel liegen demnach wie Inseln im Gefüge vor. Ihr Anteil und die Größe der ZrO₂-Partikel sind unter anderem von der Rohstoffreinheit und der Brenntemperatur abhängig. ZrO₂ bildet sich insbesondere dann, wenn chemische Verunreinigungen im Versatz, die mit SiO₂ reagieren oder feste Lösungen mit Zirkonsilikat und/oder Silika bilden, die thermische Zersetzung des ZrSiO₄ bei höheren Temperaturen, ermöglichen. Die Menge des gebildeten ZrO₂ kann beeinflusst werden, unter anderem durch die Wärmebehandlung (Brenntemperatur, Brenndauer) sowie die Menge und Art der Nebenbestandteile des ZrSiO₄.

Es wurde weiters festgestellt, dass bestimmte Zusatzmittel, insbesondere Oxide wie TiO₂, BaO, Y₂O₃ und P₂O₅ in Abhängigkeit von ihren jeweiligen Masseanteilen (absolut und relativ zueinander) verantwortlich für verbesserte Produkteigenschaften sind.

Das Gewichtsverhältnis ZrSiO₄ zu ZrO₂ im gebrannten Produkt liegt üblicherweise zwischen 80 : 20 und 98 : 2, meist zwischen 85 : 15 und 95 : 5.

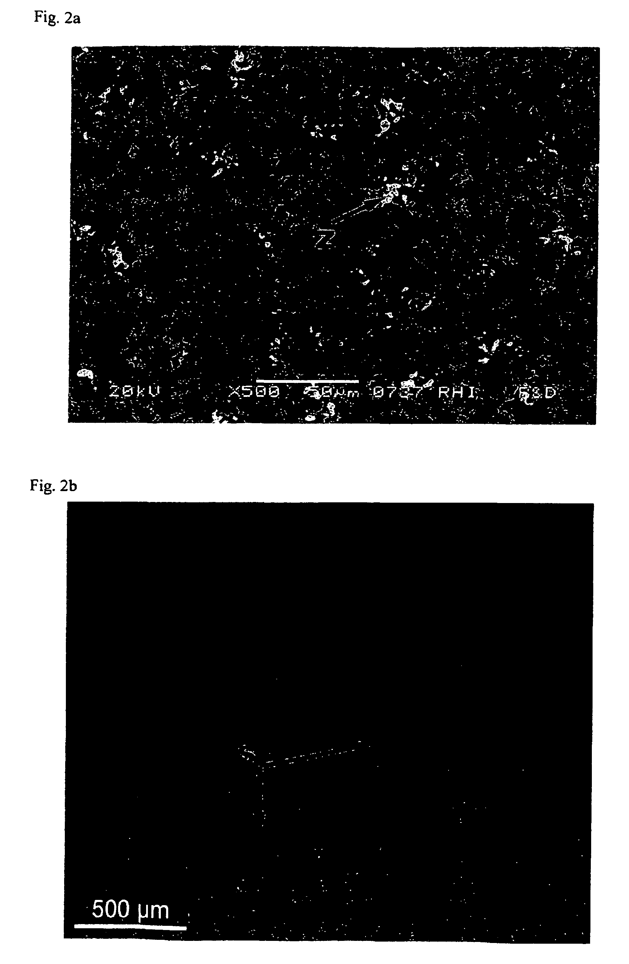

Es hat sich als günstig herausgestellt, wenn der Brand (Pyroprozess) so geführt wird, dass in der Matrix freie ZrO₂-Körner ausgebildet werden, die beispielsweise einen Durchmesser d₉₀ < 10 µm aufweisen. Diese Körner treten häufig in Gruppen innerhalb des Gefüges auf. Die so aus mehreren ZrO₂-Körnern gebildeten Inseln haben eine Form, die sich im Schnittbild als wurmartig oder fingerartig bezeichnen lässt (siehe "Z" in Fig. 2a). Manchmal sind die einzelnen ZrO₂-Teilchen aber auch zu unspezifischen dreidimensionalen Aggregaten zusammengewachsen, deren größter "Durchmesser" über 50 µm liegen kann. Diese, beabstandet zueinander angeordneten ZrO₂-Inseln optimieren die Mikrostruktur des Gefüges in Hinblick auf die gewünschten Produkteigenschaften.

Damit unterscheidet sich das erfindungsgemäße Zirkonprodukt bereits in mindestens zwei Gefügeeigenschaften von dem in der Beschreibungseinleitung erwähnten Stand der Technik auf Basis reinen Zirkonsilikats. Der Anteil an offener Porosität ist deutlich höher; die Porengrößen sind relativ klein und in einem engen Porengrößenbereich. Bei dem eingangs erwähnten bekannten Zirkonprodukt verteilen sich die Poren mehr oder weniger gleichmäßig über einen Porengrößenbereich zwischen 15 und 500 µm. Auf die Ausführungen am Ende dieser Beschreibung sowie die zugehörigen Figuren wird Bezug genommen.

Im Rahmen der erwähnten Vorversuche haben sich folgende Optimierungen ergeben:
Die Rohdichte eines Zirkonproduktes sollte ≥ 3,8 g/cm3 sein. Soweit das Zirkonprodukt eine Rohdichte zwischen 3,8 und 4,1 g/cm³ aufweist, lassen sich tendenziell vorteilhafte Produkteigenschaften erreichen, wenn über 70 %, vorzugsweise über 80 % des offenen Porenvolumens von Poren mit einem maximalen Durchmesser < 5 µm gebildet werden.

Bei Zirkonprodukten mit einer Rohdichte über 4,1 g/cm³ ist der maximale Durchmesser des Großteils der Poren tendenziell kleiner, beispielsweise < 4 µm oder < 3 µm. Die Erfindung umfasst auch Zirkonprodukte mit einer Rohdichte > 4,3 g/cm³.

Das Gefüge des Zirkonproduktes besteht nach einer Ausführungsform aus granalienartigen Strukturen mit einem Durchmesser bis 5 mm, wobei diese auf die Granalien im Versatz (batch) (aus feinteiligem ZrSiO₄-Pulver: Teilchengröße < 50 µm, bevorzugt < 30 µm oder < 10 µm unter Beimischung eines Sinterhilfsmittels) zurückgehen. Die Brenntemperatur beträgt üblicherweise zwischen 1.550 und 1.600° C. Die Anwendungstemperatur kann darüber liegen.

Vorstehende Beschreibung zur Porengröße und Porengrößenverteilung gilt auch für Produkte aus anderen Werkstoffsorten. Hierzu gehören Produkte auf Basis Al₂O₃. Im Rohstoffversatz weist das Aluminiumoxid (z. B. als Tabulartonerde oder Korund, calcinierte Tonerde) beispielsweise eine Ausgangs-Korngröße ≤ 100 µm (häufig: < 50 µm, auch mit Anteilen < 20 µm) auf. Dieses pulverförmige Material wird anschließend unter Zugabe einer Bindemittel-Lösung, z.B. Polyvinylalkohol granuliert (angestrebte Granaliengröße 1-5 mm), zu Formteilen verpresst (Pressdruck: z.B. 100-200 MPa) und gebrannt, beispielsweise bei 1.600-1.750°C. Nachstehend noch näher beschriebene "spaltförmige Poren" im Kontaktbereich benachbarter Granalien lassen sich durch eine konstante Aufheizgeschwindigkeit von beispielsweise 10-25°C/h bis zur Höchsttemperatur fördern.

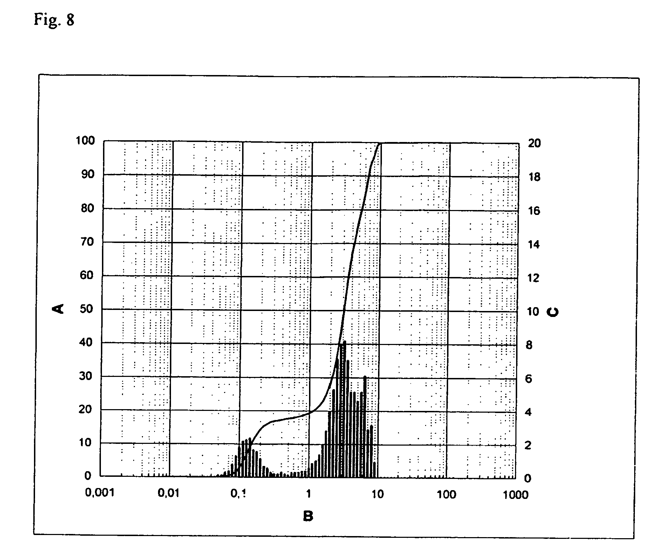

Dies gilt im Wesentlichen analog für Produkte auf Basis Al₂O₃ + ZrO₂ mit folgenden Besonderheiten: Die Masseanteile Al₂O₃:ZrO₂ liegen typischerweise zwischen 75:25 und 98:2. Es ist vorteilhaft, wenn beide Oxide in unterschiedlichen Korngrößen in den Versatz gegeben werden. Das Zr02 ist vorzugsweise das feinere Material. Beispielsweise wird ZrO₂ in einer Korngröße d₉₀ ≤ 8 µm oder ≤ 2 µm eingesetzt, Al₂O₃ in einer Korngröße d₉₀ > 10 µm (bis 100 µm). Hierdurch werden die Porengrößen und die Porenverteilung optimiert. Die kleineren ZrO₂-Partikel können Zwischenräume zwischen den größeren Al₂O₃-Teilchen ausfüllen. Der Pyroprozess kann so gestaltet werden, dass sich tetragonales ZrO₂ in monoklines ZrO₂ umwandelt. Dabei werden Mikrorisse innerhalb der Al₂O₃-Gefügematrix initiiert, da monoklines ZrO₂ ein etwa 3 % größeres Volumen aufweist als die tetragonale Form. Diese Mikrorisse führen zu Poren mit Durchmessern im Bereich ≤ 15 µm bis hin zu der bereits erwähnten Nanoporosität. Dabei entsteht auch das vorstehend genannte zweite Häufigkeitsintervall von Nanoporen im erfindungsgemäß wesentlichen Bereich ≤ 15 µm (≤ 10 µm) (siehe Fig. 8). Hierdurch wird im Zusammenwirken mit dem ersten Poren-Häufigkeitsintervall und Poren > 15 µm ein Rissfortschritt beim gebrannten Produkt reduziert. Die Duktilität des Produkts wird verbessert. Das Thermoschockverhalten ist erwartungsgemäß.

Wie ausgeführt lassen sich die Poren in mehrere Klassen unterteilen: Der überwiegende Teil liegt innerhalb eines sehr engen Porenbandes mit geringer Porengröße ("Mikroporosität"); innerhalb dieser Mikroporosität können Anhäufungen sehr kleiner Poren (Nanoporen) vorkommen. Außerdem gibt es größere Poren, die "spaltartige Poren" einschließen, wie nachstehend dargestellt.

Die Duktilität des Produktes wird günstig beeinflusst, wenn im Grenzflächenbereich der granalienartigen Strukturen spaltförmige (flächenartige) Poren ("S" in Fig. 2b) mit einem Verhältnis Länge beziehungsweise Breite : Durchmesser (Höhe) > 1 , vorzugsweise > 7, > 10 oder > 30 ausgebildet werden. Dies kann unter anderem durch eine unterschiedliche Gründichte der Granalien und/oder durch eine Steuerung des Brennprozesses erreicht werden. Diese "flächen- oder spaltartigen Poren" lassen sich als flache Hohlräume mit relativ großer Grundfläche beschreiben, die sich entlang (auf) der Granalienoberfläche erstrecken. Diese Poren schaffen einen Abstand zwischen benachbarten Kornoberflächen. Ihre Länge und Breite kann mehrere 100 µm, typisch 250 bis 700 µm betragen. Der "Durchmesser", also der Abstand zwischen gegenüberliegenden Begrenzungs-Oberflächen, beträgt üblicherweise < 100 µm, typischerweise 5 bis 40 µm.

Die Größe und Form dieser Poren kann durch entsprechende Optimierung zwischen der Größe der Granalien einerseits und der Brenntemperatur andererseits eingestellt werden. Weitere Möglichkeiten, diese spaltähnlichen Poren zwischen benachbarten Korngrenzen gezielt einzustellen, bestehen darin, die Feinheit des Pulvers, aus dem die Granalien gebildet werden, zu variieren. Andere Möglichkeiten, die genannten Poren gezielt auszubilden, sind: Veränderung der Festigkeit der Granalien bei der Aufbereitung, Variation der Dichte der Granalien, Veränderung des Temperaturverlaufs beim Brand, Veränderung der Brenntemperatur.

Diese Gefüge-Fehlstellen zwischen den granalienartigen Strukturen erhöhen zwar die Gesamtporosität des Produktes. Sie unterstützen aber die positive Beeinflussung der Gefügeelastizität des Steins und werden deshalb, im Gegensatz zum Stand der Technik, ausdrücklich akzeptiert.

Neben diesen physikalischen Parametern lässt sich das erfindungsgemäße Produkt über seine chemische Zusammensetzung zusätzlich oder gezielt einstellen.

Die Erfindung erfasst Produkte aus:
- Zirkonsilikat (ZrSiO₄)
- ZrSiO₄ + ZrO₂ [80 : 20 bis 98 : 2]
- Al₂O₃
- Al₂O₃ + ZrO₂ [75 : 25 bis 98 : 2]

In [] sind typische Massenanteile im Versatz genannt. Nebenbestandteile (bis 10 M.-%) sind möglich.

Für ein Zirkonprodukt gilt dabei: Neben üblichen Nebenbestandteilen in einem Zirkonsilikatmaterial, insbesondere Al₂O₃, TiO₂, Hf02 wurde festgestellt, dass insbesondere BaO, Y₂O₃ und P₂O₅ die Produkteigenschaften positiv beeinflussen können.

Diese Oxide können gezielt zugemischt werden, sofern sie nicht Bestandteil des verwendeten Zirkonsilikats sind.

Der Gesamtanteil an TiO₂, BaO, Y₂O₃ und P₂O₅ kann bis 2,5 Masse-% betragen, wobei ein Anteil von 1,0 Masse-% günstig ist. Dabei kann der Anteil an P₂O₅ bis 0,05 Masse-% betragen.

Das Verhältnis zwischen BaO zur Summe Y₂O₃ + Al₂O₃ + HfO₂ + TiO₂ beträgt nach einer Ausführungsform zwischen 2 · 10⁻² und 4 · 10⁻², insbesondere zwischen 2,5 · 10⁻² und 3,5 · 10⁻².

Das Verhältnis der Summe der Oxide BaO + TiO₂ + Al₂O₃ + Y₂O₃ + HfO₂ zu P₂O₅ kann zwischen 50 und 300, insbesondere zwischen 65 und 250 liegen.

Die Einstellung der Nebenbestandteile lässt es zu, erfindungsgemäße Zirkonprodukte mit einer Rohdichte bis 4,4 g/cm³ bei Brenntemperaturen bis 1.600° C herzustellen. Zu berücksichtigen ist auch der Anteil an SiO₂, der aus der thermischen Zersetzung des ZrSiO₄ stammt. Insbesondere zur Erzielung höherer Rohdichten für das gebrannte Produkt können folgende Rohstoffanteile hilfreich sein:
- Zirkonsilikatpulver in einer Kornfraktion < 30 µm, davon 30 Gew.-% < 10 µm, oder
- Zirkonsilikatpulver in einer Korngröße < 10 µm.

Das nachstehend spezifizierte gebrannte Produkt (Gesamt-Brennzeit: häufig 100 bis 250 Stunden, davon 2-20 h bei Maximaltemperatur) erfüllt die gestellten Anforderungen und weist beispielsweise folgende Eigenschaften auf:
Es wurde ein Korrosionstest gemäß ASTM C 621 - 84 durchgeführt, allerdings wurden Probenkörper mit den Abmessungen 120 x 25 x 13 mm benutzt. Prüftemperatur war 1.550° C, die Haltezeit betrug 260 Stunden. Die Probenkörper wurden in einem statischen Versuch 60 mm tief in eine Borosilikatschmelze folgender Zusammensetzung getaucht: SiO₂: 80,5, Al₂O₃: 2,5, (Na+K)₂O: 4,0, B₂O₃: 11,5, andere 1,5 (alle Angaben in Masse-%). Die Korrosion wurde an zwei Stellen des eingetauchten Probekörpers ermittelt, a) an der Oberfläche der Glasschmelze und b) 30 mm unterhalb der Oberfläche der Glasschmelze. Dabei wurde ein erfindungsgemäßes Produkt mit dem eingangs erwähnten bekannten Zirkonsilikatprodukt verglichen. Bei dem bekannten Produkt kam es zum Ausschwitzen von Schmelzphase in Form von Perlen auf der Stein-Oberfläche und zu einer deutlich erkennbaren Korrosion. Das erfindungsgemäße Produkt zeigte keine derartigen Erscheinungen. Es ist deshalb im Besonderen zur Verwendung in Glasschmelzwannen zur Herstellung optischer Gläser geeignet, bei denen Kontaminationen soweit wie möglich vermieden werden müssen.

Zwischen den genannten Vergleichsprodukten wurde ein weiterer Test hinsichtlich des Druckfließens (gemäß DIN EN 993-9) durchgeführt. Die ermittelten Daten lagen für das erfindungsgemäße Produkt bis 50 % unter denen für das Produkt gemäß Stand der Technik. Ursächlich hierfür dürfte der spezifische Gefügeaufbau des erfindungsgemäßen Produktes sein.

Ein weiterer Vergleichstest wurde zum Thermoschockverhalten (gemäß DIN 51068) durchgeführt. Während sich beim Produkt nach dem Stand der Technik bereits nach zwei Temperaturwechseln große Risse zeigten, war das erfindungsgemäße Produkt bei gleichen Versuchsbedingungen nach zwei Temperaturwechseln rissfrei. Nach sieben Temperaturwechseln war das bekannte Produkt vollständig zerstört. Im erfindungsgemäßen Produkt wurden zwar Risse festgestellt, eine Zerstörung ergab sich aber erst nach ≥ 10 Temperaturwechseln. Auch hier sind der beschriebene Gefügeaufbau sowie die daraus resultierenden physikalischen Eigenschaften entscheidend dafür, dass mehr Energie absorbiert werden kann. Es werden weniger und kleinere Risse gebildet als im Stand der Technik. Das Gefüge ist bei einem erfindungsgemäßen Produkt deutlich "flexibler" als bei dem bekannten Produkt. Die entsprechenden Messungen erfolgen dabei mittels Keilspalttest, wie in PCT/EP2005/002226 beschrieben. Diese Schrift ist seit 24.06.05 öffentlich zugänglich über die Bibliothek des Instituts für Gesteinshüttenkunde an der Montanuniversität Leoben per Adresse: Peter-Tunner-Straße 5, A-8700 Leoben.

Durch weitere Optimierungen hat sich ein Zirkonprodukt ergeben, dessen Gefüge folgende Oxidanalyse (in Masse-%) aufweist:

| | |
|---|---|
| ZrO₂: | 62-65 |
| SiO₂: | 32-34 |
| Al₂O₃: | 0,5 - 1,5 |
| TiO₂: | 0,5-2 |
| HfO₂: | 0,6 - 1,5 |
| Y₂O₃: | 0,1-0,5 |
| BaO: | 0,03-0,3 |
| P₂O₅: | 0,01-0,05 |
| Fe₂O₃: | 0,01-0,1. |

Weitere Oxide wie Na₂O, MgO, K₂O, CaO, V₂O₅, Cr₂O₃, MnO, NiO sind in Anteilen von jeweils < 0,1 Masse-% möglich.

Die Herstellung des geprüften Zirkon-Produktes ist beispielhaft wie folgt:
Zirkonsilikat-Pulver (< 30 µm) wird mit einem Sinterhilfsmittel (TiO₂) zu Granalien (Durchmesser 3-5 mm) aufbereitet und anschließend bei 150 MPa Pressdruck zu einem Formteil gepresst sowie bei 1.580° C gebrannt. Die physikalischen Eigenschaften des Produktes sind wie folgt:
   Rohdichte: 3,8 g/cm³
   Offene Porosität: 17 Vol.-%

Für andere erfindungsgemäße Produkte wurden folgende Daten ermittelt:
Rohdichte: 4,1 g/cm³
Offene Porosität: 9 Vol.-%

### beziehungsweise

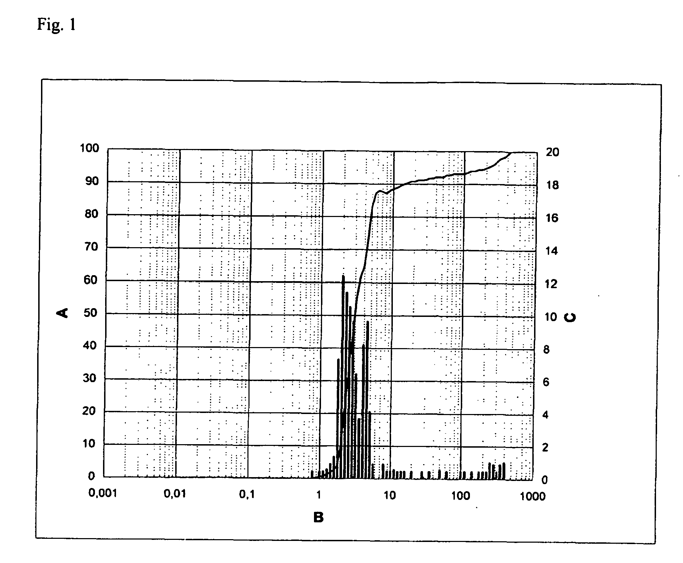

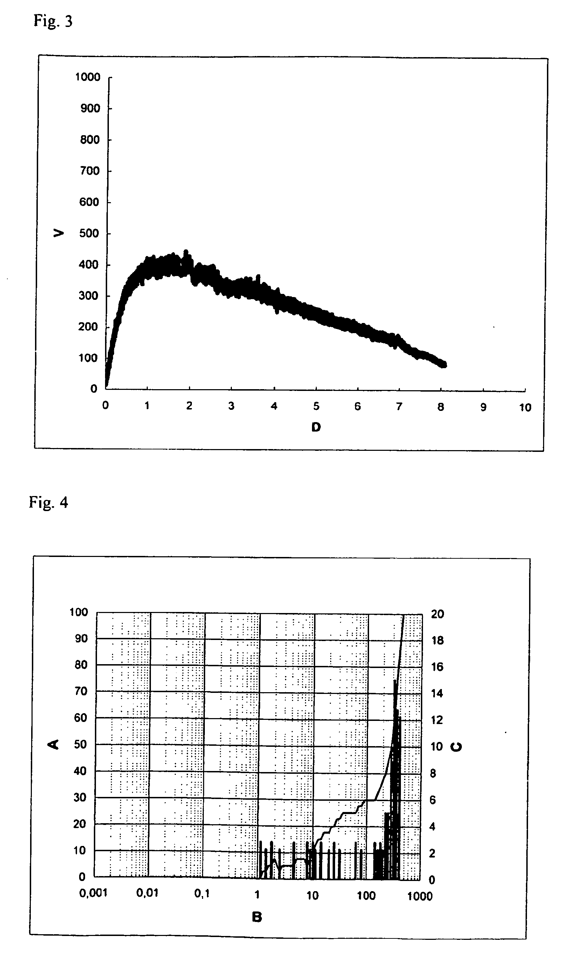

Rohdichte: 4,3 g/cm³
Offene Porosität: 5 Vol.-%
Porengrößenverteilung des geprüften Produkts: siehe Figur 1. Das Diagramm zeigt auf der Abzisse den Porendurchmesser in µm, auf der Ordinate die offene Porosität in Relativ-%, und zwar in Histogramm (Balken) Darstellung und als Summenkurve.
Gefügeaufbau: siehe Figuren 2a, 2b, wobei Fig. 2b die spaltartigen Poren "S" (im Schnitt) gut erkennen lässt.
Kraft-/Verschiebediagramm (gemäß Keilspalttest): siehe Figur 3.

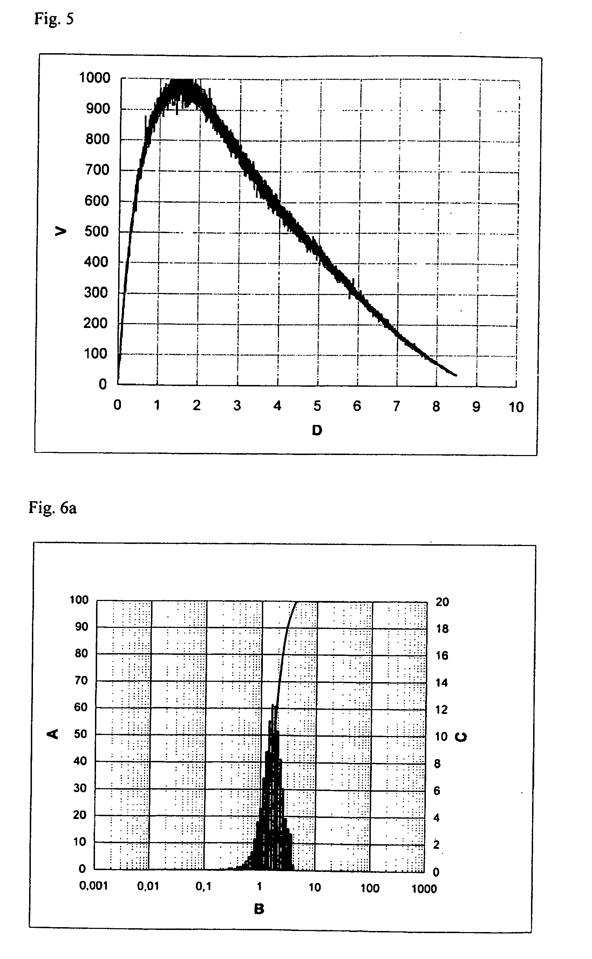

Figur 4 zeigt die Porengrößenverteilung des Vergleichsprodukts, eines konventionellen, bekannten Zirkonsilikatproduktes und Figur 5 das zugehörige Kraft-/Verschiebediagramm.

Die deutlich unterschiedliche Porengrößenverteilung sowie das unterschiedliche Kraft-/Weg-Diagramm sind auffällig.

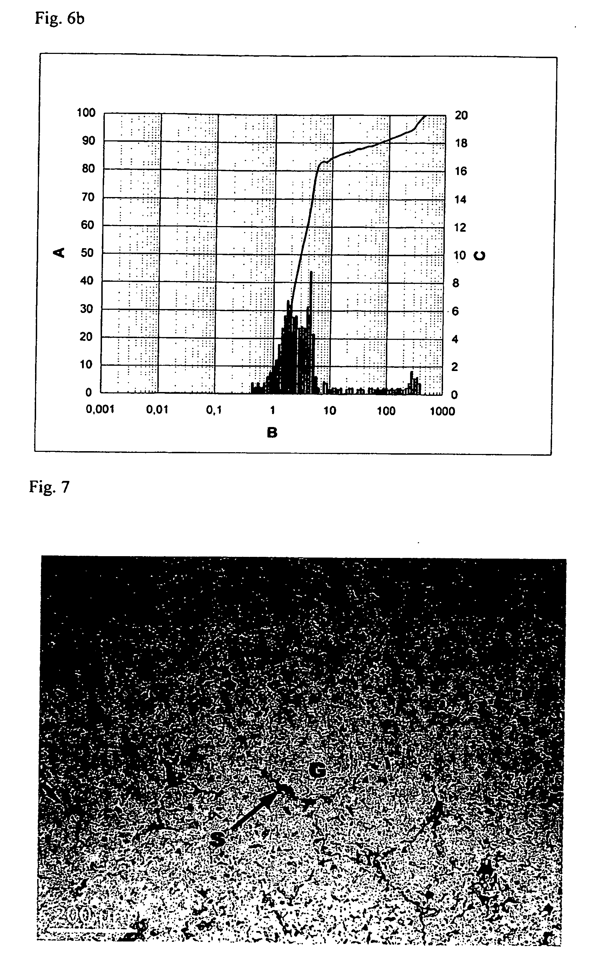

Fig. 6a zeigt die Porengrößen und Porengrößenverteilung für ein erfindungsgemäßes Produkt aus Al₂O₃, welches aus einem pulverförmigen Material (Korngröße < 100 µm) nach Granulierung (unter Verwendung von Polyvinylalkohol als Granulier-Hilfsmittel) zu Granalien mit einem Durchmesser bis 5 mm, Verpressen zu einem Formteil (Pressdruck: 140 MPa) und Brand (Gesamt-Brennzeit: 200 h, davon 20 h bei Tₘₐₓ = 1.720°C) erhalten wurde. Die offene Gesamtporosität beträgt 15,8 Vol.-%, die Rohdichte 3,2 g/cm³. Bild 6b zeigt die Porenverteilung einer analogen Probe nach 8h Haltezeit bei max. 1.770°. Die offene Gesamtporosität beträgt 9,1 Vol.-%. In beiden Fällen ist die spezifische Porenverteilung mit einem Anteil von ca. 60 Vol.-% (Fig. 6a) beziehungsweise ca. 80 Vol.-% im Bereich 0,6-6 µm (Fig. 6a) beziehungsweise 0,8-8 µm (Fig. 6b) zu erkennen. Fig. 7 zeigt das zugehörige Gefüge. Die Granalienstruktur (mit Umrissen der ursprünglichen Granalien "G") ist noch zu erkennen. Einige der vorstehend erwähnten spalt-/flächenförmigen Poren zwischen den Granalien sind markiert.

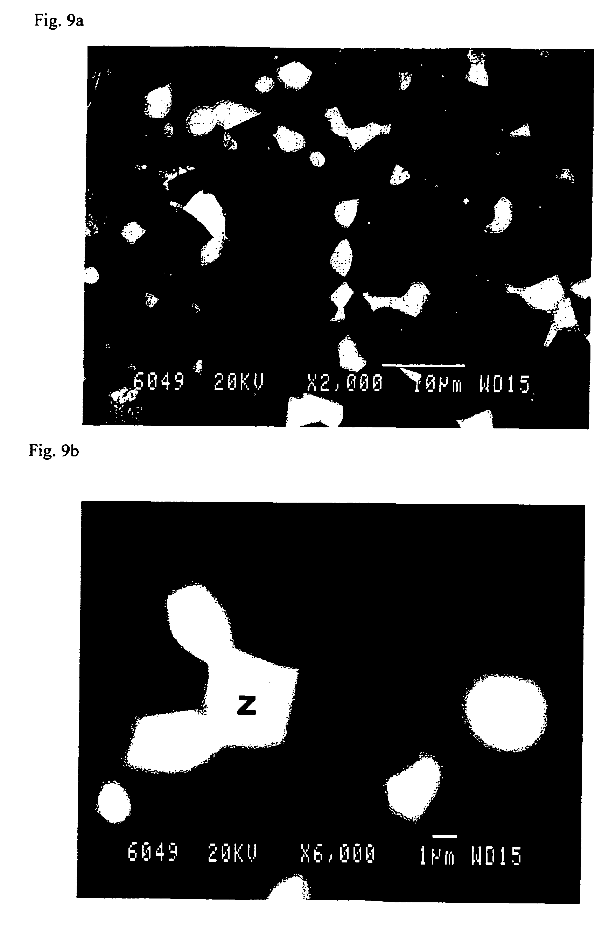

Die Darstellung nach Fig. 8 entspricht den Darstellungen in Fig. 6a, b, hier jedoch für ein Produkt aus 92 Masse-% Al₂O₃ und 8 Masse-% ZrO₂ nach 20h Haltezeit im Pyroprozess (Gesamt-Brennzeit: 180 h) bei maximal 1.720°C. Die offene Gesamtporosität beträgt 11,2 Vol.-%. Neben dem wesentlichen peak in der Verteilungskurve zwischen 1 und 10 µm ist ein zweiter peak zwischen 0,07 und 0,5 µm zu erkennen, der die erwähnte Nanoporosität beschreibt. Fig. 9a,b zeigen zugehörige Gefügebilder in 2000 und 6000 facher Vergrößerung. Die hellen Teilchen sind die ZrO₂-Körner (Z"), umgeben von der Al₂O₃-Matrix ("K"). Eine Pore ist mit "P" bezeichnet. "N" zeigt einen "Nanoriss" mit einer Rissbreite von weniger als 0,01 µm. Die ZrO₂-Körper bestehen teilweise aus einzelnen ZrO₂-Teilchen, teilweise aus zusammen gesinterten ZrO₂-Partikeln. Die Kaltdruckfestigkeit des Produkts nach 30 Temperaturwechseln gemäß DIN 51068, Teil 1 lag jeweils über 270 MPa (bestimmt gemäß DIN EN 993-5). Das vergleichbare Produkt gemäß Stand der Technik, welches im Gießverfahren hergestellt wurde, hatte nur eine Kaltdruckfestigkeit (nach 30 Temperaturwechseln) von 27 MPa.

Die Kaltdruckfestigkeit (DIN EN 993-5) des erfindungsgemäßen Produkts vor Temperaturbehandlung war ca. 280 MPa. Im Vergleich: ca. 60 MPa bei einem Vergleichsprodukt aus 99 % Al₂O₃ mit einer Porenverteilung ähnlich Fig. 4. Die Heißbiegefestigkeit gemäß DIN EN 993-7 bei 1.400° C betrug 32 MPa, die des Vergleichsprodukts lag bei 5,5 MPa.

Soweit in vorstehender Beschreibung Angaben zur Porosität, insbesondere zur Porengröße, Porengrößenverteilung und Gesamtanteil an offener Porosität gemacht wurden, beziehen sich diese auf entsprechende Definitionen und Bestimmungsmethoden gemäß British Standard BS 1902-3.16: 1990. Messungen mittels Quecksilber-Druck-Porosimetrie nach dieser Norm erfolgten mit einem Gerät des Typs Micromeritics Auto Pore IV, 9400 V 105 bei 10 Sekunden Äquilibrierungszeit (Ausgleichsphase) je Druckstufe (Druckniveau).

Neben den Porengrößen und der Porengrößenverteilung wurde aus dem aus den Messungen erhaltenen offenen Porenvolumen auch die Rohdichte ermittelt, wie in der Norm angegeben, so dass sich die angegebenen DichteWerte ebenfalls auf diese Norm beziehen.

In den Figuren 1, 4, 6a, 6b und 8 bedeuten: A= relative offene Porosität, B= Porendurchmesser in µm und C= Porenverteilung in %

In den Fig. 3 und 5, die jeweils ein Kraft-/Verschiebediagramm zeigen, welches nach Durchführung des Keilspalttests bei 1400°C am gebrannten Produkt erhalten wurde, bezeichnet ""V" die Vertikallast Fᵥ [N] und "D" die Vertikalverschiebung δᵥ [mm].

Die in den Ansprüchen, der Beschreibung und den Figuren offenbarten Merkmale können sowohl einzeln als auch in Kombinationen für die Lösung der Aufgabe wesentlich sein.

## Patentansprüche

1. Gebranntes, keramisches, feuerfestes Produkt, dessen Gefüge zu > 90 Masse-% aus mindestens einer der folgenden Werkstoffgruppen besteht:
a) ZrSiO₄
b) ZrSiO₄ + ZrO₂
c) Al₂O₃
d) Al₂O₃ + ZrO₂ und
e) eine offene Porosität von 2-30 Vol.-% besitzt, wobei
f) mehr als die Hälfte der offenen Porosität aus Poren besteht, deren Durchmesser ≥ 1 µm und deren maximaler Durchmesser 15 µm beträgt und diese Poren in einem Porengrößenintervall liegen, dessen Maximalwert kleiner oder gleich dem 10-fachen des Minimalwertes ist.

2. Produkt nach Anspruch 1, bei dem mehr als die Hälfte der offenen Porosität aus Poren mit einem Durchmesser ≤ 10 µm besteht.

3. Produkt nach Anspruch 1, bei dem mehr als die Hälfte der offenen Porosität aus Poren mit einem Durchmesser ≤ 5 µm besteht.

4. Produkt nach Anspruch 1, bei dem mehr als 60 % der offenen Porosität aus Poren mit einem Durchmesser ≤ 10 µm besteht.

5. Produkt nach Anspruch 1, bei dem die Poren in einem Porengrößenintervall liegen, dessen Maximalwert kleiner oder gleich dem 7-fachen des Minimalwertes ist.

6. Produkt nach Anspruch 1, dessen offene Porosität 2-25 Vol.-%, insbesondere 5-18 Vol.-% beträgt.

7. Produkt nach Anspruch 1, dessen Gefüge in situ beim Brand gebildete ZrO₂-Körner aufweist.

8. Produkt nach Anspruch 1, dessen Gefüge ZrO₂ in monokliner Kristallstruktur enthält.

9. Produkt nach Anspruch 1, mit einer Rohdichte > 3,2 g/cm³, insbesondere > 3,8 g/cm³.

## Claims

1. Fired ceramic refractory product whose structure is defined by >90M.-% of at least one of the following groups of material:
a) ZrSiO₄
b) ZrSiO₄ + ZrO₂
c) Al₂O₃
d) Al₂O₃ + ZrO₂ and
e) possesses an open porosity of 2-30% by volume, wherein
f) more than half of the open porosity consists of pores whose diameter is ≥ 1 µm and the maximum diameter of which is 15 µm and these pores lie within a pore size interval whose maximum value is less than or equal to 10 times the minimum value.

2. Product according to claim 1 in which more than half of the open porosity consists of pores with a diameter of ≤ 10 µm.

3. Product according to claim 1 in which more than half of the open porosity consists of pores with a diameter of ≤ 5 µm.

4. Product according to claim 1 in which more than 60% of the open porosity consists of pores with a diameter of ≤ 10 µm.

5. Product according to claim 1 in which the pores lie within a pore size interval whose maximum value is less than or equal to 7 times the minimum value.

6. Product according to claim 1 whose open porosity amounts to 2-25% by volume, in particular 5-18% by volume.

7. Product according to claim 1 whose structure exhibits ZrO₂ grains formed in situ during firing.

8. Product according to claim 1 whose structure contains ZrO₂ in a monoclinic crystal structure.

9. Product according to claim 1 with a bulk density of > 3.2 g/cm³, in particular > 3.8 g/cm³_{.}

## Revendications

1. Produit céramique réfractaire cuit, dont la structure est composée à > 90 % en masse d'au moins l'un des groupes de matières suivants :
a) ZrSiO₄
b) ZrSiO₄ + ZrO₂
e) Al₂O₃
d) Al₂O₃ + ZrO₂ et
e) qui présente une porosité ouverte de 2 à 30 % en volume,
f) plus de la moitié de la porosité ouverte étant constituée de pores dont le diamètre est ≥ 1 µm et dont le diamètre maximal est de 15 µm et lesdits pores se situant dans un intervalle de grandeur de pores dont la valeur maximale est inférieure ou égale à 10 fois la valeur minimale.

2. Produit selon la revendication 1, dans lequel plus de la moitié de la porosité ouverte est constituée de pores d'un diamètre ≤ 10 µm.

3. Produit selon la revendication 1, dans lequel plus de la moitié de la porosité ouverte est constituée de pores d'un diamètre ≤ 5 µm;

4. Produit selon la revendication 1, dans lequel plus de 60 % de la porosité ouverte est constituée de pores d'un diamètre ≤ 10 µm.

5. Produit selon la revendication 1, dans lequel les pores se situent dans un intervalle de grandeur de pores dont la valeur maximale est inférieure ou égale à 7 fois la valeur minimale.

6. Produit selon la revendication 1, dont la porosité ouverte est de 2 à 25 % en volume, notamment de 5 à 18 % en volume.

7. Produit selon la revendication 1, dont la structure comporte des grains de ZrO₂ formés in situ à la cuisson.

8. Produit selon la revendication 1, dont la structure contient du ZrO₂ en structure cristalline monoclinique.

9. Produit selon la revendication 1, d'une masse volumique apparente > 3,2g/cm3, notamment > 3,8 g/cm3.
